# EUROPÄISCHE PATENTSCHRIFT

(11) **EP 0 753 535 B1**
(45) Veröffentlichungstag und Bekanntmachung des Hinweises auf die Patenterteilung: **22.04.1998**
(21) Anmeldenummer: 96110653.1
(22) Anmeldetag: 02.07.1996
(51) Int. Cl.: C08J 11/24, C08L 75/00

(54) **Verfahren zur Herstellung Isocyanuratgruppen enthaltender Polyole**
Process for the preparation of isocyanurate group containing polyols
Procédé pour la préparation de polyols contenant des groupes isocyanurates

(30) Priorität: 12.07.1995 DE 19525301
(43) Veröffentlichungstag der Anmeldung: 15.01.1997
(73) Patentinhaber: BASF AKTIENGESELLSCHAFT, 67056 Ludwigshafen (DE)
(72) Erfinder: Naber, Bernhard, 01987 Schwarzheide (DE); Neiss, Vera, 01987 Schwarzheide (DE); Gassan, Michael, 01968 Senftenberg (DE); Lezius, Maritta, 01987 Schwarzheide (DE)

(56) Entgegenhaltungen:
- DE-A- 2 902 509
- US-A- 3 708 440
- US-A- 4 110 266

## Beschreibung

Die Erfindung betrifft ein Verfahren zur Herstellung Isocyanuratgruppen enthaltender Polyole durch Umsetzung von Polyisocyanuraten (PIR) mit kurzkettigen, Hydroxylgruppen enthaltenden Verbindungen in Anwesenheit von Trägerpolyolen. Die Erfindung betrifft weiterhin die Verwendung der so erhaltenen Polyole zur Herstellung von Polyurethanen (PUR) und PIR.

PIR werden als zellige oder zellfreie Kunststoffe nach dem Polyadditionsverfahren hergestellt, wobei einem Gemisch von Isocyanaten, insbesondere auf Basis Polymethylendiisocyanat, und Polyolen, in dem die Isocyanate in großem Überschuß vorliegen, Katalysatoren zugegeben werden, die die Isocyanatgruppen zu Isocyanuratgruppen trimerisieren lassen. Solche Katalysatoren sind spezielle Phosphine, Phospholinderivate, Amine, Alkalisalze, Metallverbindungen und Mannich-Basen. Der Prozeß ist in Becker/Braun, Kunststoffhandbuch, Band 7, Polyurethane, Carl-Hanser-Verlag, 3. Auflage, München, Wien 1993, ausführlich beschrieben. Ziel der PIR-Bildung ist die Ausbildung besonderer Eigenschaften, wie beispielsweise hohe Härte, Flammwidrigkeit und Erhöhung der Temperaturbeständigkeit. Dazu werden dem System aus Polyolkomponente und Isocyanat Isocyanate in einer Menge einverleibt, die einem Isocyanatindex von mindestens 150, üblicherweise jedoch 200 bis 800, entspricht. Dieser Überschuß an Isocyanatgruppen reagiert praktisch quantitativ und irreversibel zu Isocyanurat.

In der Patent- und Fachliteratur werden Verfahren zum chemischen Recycling von PIR im Verhältnis zu PUR und PUR/Polyharnstoffen eher selten erwähnt. In den meisten Fällen wird PIR neben PUR genannt, jedoch in den Beispielen nicht konkret beschrieben. Ein Beispiel dafür ist die DE-A-29 02 509, in der Katalysatoren auf Titan- und Zirkoniumbasis für die Glykolyse von PUR und PIR geschützt, in den Ausführungesbeispielen aber nur PUR eingesetzt werden.

H. Ulrich et al. beschreiben in Polymer Engineering and Science 18 (1978) 11, S. 844 bis 848, in SPE Tech. Papers 35, Conf., Montreal Bd. 23, 1977, S. 41 bis 43, ein Verfahren zur Glykolyse von PIR-Schaumstoffen, das 1973 durch das US-A-3 708 440 geschützt wurde. Arbeitet man dieses Verfahren nach, resultiert nicht das erwartete homogene Glykolysat, das zu neuerlichen PUR- und/oder PIR-Synthesen einsetzbar ist. Stattdessen erhält man schwarze, koksartige Klumpen, die eine weitere Verarbeitung unmöglich machen.

H. Ulrich diskutiert einen Reaktionsmechanismus, nach dem das Glykolyseglykol den Isocyanuratring unter Bildung von kurzkettigem Urethan und aromatischem Amin spaltet.

Auch die in der Literatur häufig beschriebenen Glykolyseverfahren führen bei PIR nicht zum Erfolg. In jedem Fall werden die eingesetzten PIR nicht in eine Flüssigkeit umgewandelt, sondern zersetzen sich unter Bildung koksartiger Klumpen. Beispiele für solche auf PUR, nicht aber auf PIR, anwendbaren Glykolyseverfahren sind in den Schriften
US-A-4 110 266,
EP-A-0 601 596,
EP-B-0 542 806,
DE-A-43 24 156,
DE-A-42 15 014,
DE-A-41 40 967 und
DE-A-41 28 588
beschrieben. Diese Aufstellung ist bei weitem nicht vollständig.

Auch die Glykolyse gemäß DE-A-42 34 335 führt bei PIR nicht zum Ziel. Es werden zwar flüssige Produkte erhalten, die aber in hohem Maße schwarze, krümelige Verunreinigungen enthalten.

Der Erfindung lag daher die Aufgabe zugrunde, ein einfaches und wirtschaftliches Verfahren zur Glykolyse von PIR zu entwickeln, das zu einem Recyclatpolyol führt, dessen Amingehalt unter dem Kennzeichnungswert von 0,1 Gew.-% liegt und das sofort als solches zur Herstellung von PUR und PIR eingesetzt werden kann.

Diese Aufgabe wurde erfindungsgemäß dadurch gelöst, daß die Herstellung von Isocyanuratgruppen enthaltenden Polyolen durch Umsetzung von PIR mit kurzkettigen, Hydroxylgruppen enthaltenden Verbindungen in Anwesenheit von Trägerpolyolen mit einer OH-Zahl von höchstens 500 mg KOH/g und einer Molmasse von mindestens 450 g/mol erfolgt.

Gegenstand der Erfindung ist somit ein Verfahren zur Herstellung Isocyanuratgruppen enthaltender Polyole durch Umsetzung von PIR mit Ethylenglykol, Diethylenglykol, Propylenglykol, Dipropylenglykol, einzeln oder im Gemisch untereinander, das dadurch gekennzeichnet ist, daß die Umsetzung der PIR in Anwesenheit von Trägerpolyolen mit einer OH-Zahl von höchstens 500 mg KOH/g und einer Molmasse von mindestens 450 g/mol erfolgt.

Gegenstände der Erfindung sind weiterhin die nach diesem Verfahren hergestellten Isocyanuratgruppen enthaltenden Polyole sowie deren Verwendung zur Herstellung von PUR und PIR.

Zur Durchführung des erfindungsgemäßen Verfahrens wird das PIR, zumeist in zerkleinerter Form, mit einem Gemisch aus eingesetzten kurzkettigen, Hydroxylgruppen enthaltenden Verbindungen und Trägerpolyol zur Reaktion gebracht.

Nach einer besonders vorteilhaften Ausführungsform wird das erfindungsgemäße Verfahren so durchgeführt, daß das Gemisch aus eingesetzten kurzkettigen, Hydroxylgruppen enthaltenden Verbindungen und Trägerpolyol vor Zugabe des PIR auf Temperaturen von 190 bis 240°C, vorzugsweise 210 bis 230°C, aufgeheizt und nach Zugabe des PIR die Temperatur um 10 bis 40°C gesenkt wird. Bei dieser Temperatur wird die Reaktion über 1,5 bis 3 h, vorzugsweise 2 bis 2,5 h, unter ständigem Rühren durchgeführt. Nach Abschluß der Reaktion wird das Reaktionsgemisch auf 50 bis 150°C, vorzugsweise 80 bis 130°C, abgekühlt und ihm ein Hydroxid eines Alkali- oder Erdalkalimetalles in einer Menge von höchstens 5 Gew.-%, bezogen auf den Gesamtansatz, zugesetzt. Bei dieser Temperatur wird 0,5 bis 1,5 h gerührt.

Vorzugsweise werden hierzu Natriumhydroxid oder Kaliumhydroxid eingesetzt.

Nach einer weiteren vorteilhaften Ausführungsform wird das Reaktionsgemisch nach Abschluß der Reaktion auf 100 bis 160°C abgekühlt und ihm ein Glycidether in einer Menge von höchstens 10 Gew.-%, bezogen auf den Gesamtansatz, zugesetzt und bei dieser Temperatur 0,5 bis 1,5 h gerührt.

Vorzugsweise kommen dabei als Glycidether monofunktionelle Glycidether, besonders bevorzugt der 2-Ethylhexylglycidether, zur Anwendung.

Gegebenenfalls kann sich daran noch eine Aufarbeitung des Recyclatpolyols anschließen, beispielsweise durch Filtration.

Das Verhältnis der eingesetzten kurzkettigen, Hydroxylgruppen enthaltenden Verbindungen zum Trägerpolyol beträgt dabei im allgemeinen (5 bis 20) zu 1, das Verhältnis des Gemisches aus eingesetzten kurzkettigen, Hydroxylgruppen enthaltenden Verbindungen und Trägerpolyol zum PIR (1 bis 5) zu 1.

Zur Umsetzung von PIR mit kurzkettigen, Hydroxylgruppen enthaltenden Verbindungen werden erfindungsgemäß Trägerpolyole mit einer OH-Zahl von höchstens 500 mg KOH/g und einer Molmasse von mindestens 450 g/mol eingesetzt. Geeignete Trägerpolyole sind beispielsweise Polyole, die durch Anlagerung von Propylenoxid an dreifunktionelle Alkohole hergestellt werden. Vorzugsweise verwendet man Polyole auf Basis von Glycerin und/oder Trimethylolpropan.

Als kurzkettige, Hydroxylgruppen enthaltende Verbindungen können prinzipiell alle zwei- oder höherfunktionellen Alkohole verwendet werden.

Besonders vorteilhaft für das erfindungsgemäße Verfahren sind zweifunktionelle Alkohole. Die Alkohole können einzeln oder als Gemisch eingesetzt werden.

Bevorzugt eingesetzt werden Ethylenglykol und seine höheren Homologen, insbesondere Diethylenglykol und Propylenglykol und seine höheren Homologen, insbesondere Dipropylenglykol, einzeln oder im Gemisch untereinander.

Das Verfahren kann in Anwesenheit üblicher Polyurethankatalysatoren durchgeführt werden. Vorzugsweise werden hierfür Zinn- und Titan-organische Verbindungen eingesetzt.

Als PIR können Abfälle verwendet werden, beispielsweise aus der Produktion von PIR-Blockschäumen, PIR-Formteilen oder auch Sandwichelementen.

Es war überraschend, daß die Glykolyse zu Flüssigprodukten ohne nennenswerten Gehalt an Festprodukten führt, wenn sie erfindungsgemäß unter Verwendung eines Trägerpolyols durchgeführt wird.

Überraschend war auch, daß die nach diesem Verfahren hergestellten Glykolysepolyole einen Gehalt an aromatischen Aminen unter 0,1 % aufweisen, was eine aufwendige Entaminierung entbehrlich macht. Es wäre zu erwarten gewesen, daß durch Hydrolyse und Harnstoffspaltung während der Glykolyse Amine in stärkerem Umfang gebildet werden.

Weiterhin war überraschend, daß die IR-Spektren praktisch unverändert die Isocyanuratstrukturen im Glykolysat zeigen und damit die weiter oben erläuterte Theorie von H. Ulrich (Angriff auf und Aufbruch der Isocyanuratringe) widerlegt wird.

Die nach diesem Verfahren hergestellten Glykolysepolyole können ohne zusätzliche Behandlung wieder zu PUR oder PIR verarbeitet werden.

Dazu werden sie allein, vorzugsweise jedoch im Gemisch mit anderen Hydroxylgruppen enthaltenden Verbindungen, in Gegenwart von üblichen Treibmitteln, Katalysatoren, Hilfsmitteln und Zusatzstoffen mit Polyisocyanaten umgesetzt.

Da die erfindungsgemäßen Glykolysepolyole sehr niedrige Viskositäten aufweisen, können sie auch vorteilhaft für FCKW-freie Hartschaumsysteme eingesetzt werden.

Die Erfindung soll an nachstehenden Beispielen näher erläutert werden.

### Beispiel 1 (Vergleich)

120 g Diethylenglykol wurden mit 0,15 Gew.-%, bezogen auf den Gesamtansatz, Titantetrabutylat versetzt und auf 220°C aufgeheizt. Danach wurden 50 g PIR-Schaum (NCO-Index 350) so schnell zugegeben, daß die Masse rührfähig blieb. Der Ansatz wurde 3 h gerührt. Das Produkt enthielt schwarze Stücke, die noch die Schaumstruktur zeigten.

Das Produkt war unbrauchbar.

### Beispiel 2 (Vergleich)

Es wurde wie in Beispiel 1 gearbeitet, jedoch über die Reaktionszeit analog DE-A-42 34 335 20 Gew.-%, bezogen auf den Gesamtansatz, 2-Ethylhexylglycidether zugetropft. Auch hier war das Produkt inhomogen und unbrauchbar.

### Beispiel 3

55 g eines PIR-Schaumes (NCO-Index 350) wurden bei 215 bis 225°C in ein Gemisch aus 100 g Diethylenglykol, 15,5 g eines Polyols auf Basis Glycerin und Propylenoxid (PO) (1 Mol Glycerin: 8,5 Mol PO, Lupranol 3300 der BASF Aktiengesellschaft) und 0,15 Gew.-%, bezogen auf den Gesamtansatz, Titantetrabutylat so eingetragen, daß der Kolbeninhalt rührfähig blieb. Nach Beendigung der Zugabe wurde die Temperatur auf 190 bis 200°C gesenkt und unter Rühren 2 h belassen. Danach wurde die Temperatur weiter auf 100°C gesenkt, 2 g festes NaOH zugegeben und eine weitere Stunde gerührt. Es wurde eine homogene, schwarzbraune Flüssigkeit mit folgenden Kennwerten erhalten:

| | |
|---|---|
| OH-Zahl | 638 mg KOH/g |
| Säurezahl | 0,22 mg KOH/g |
| Viskosität bei 25°C | 3520 mPa·s |
| MDA-Gehalt | 0,089 Gew.-% |

### Beispiel 4

Es wurde wie in Beispiel 3 gearbeitet, jedoch keine Nachbehandlung mit NaOH durchgeführt. Das Glykolysat wies folgende Kennwerte auf:

| | |
|---|---|
| OH-Zahl | 625 mg KOH/g |
| Säurezahl | 11,4 mg KOH/g |
| Viskosität bei 25°C | 3844 mPa·s |
| MDA-Gehalt | 0,071 Gew.-% |

### Beispiel 5

Es wurde wie in Beispiel 3 gearbeitet, jedoch ein PIR-Schaum mit einem NCO-Index von 600 eingesetzt. Das Glykolysat wies folgende Kennwerte auf:

| | |
|---|---|
| OH-Zahl | 734 mg KOH/g |
| Säurezahl | 0,05 mg KOH/g |
| Viskosität bei 25°C | 3174 mPa·s |
| MDA-Gehalt | 0,030 Gew.-% |

### Beispiel 6

80 g eines ca. 20 Gew.-% Glasfasern enthaltenden PIR-Schaumes auf Basis eines Polyethylenterephthalat-Polyols (NCO-Index 450) wurden bei einer Temperatur von 215 bis 225°C einem Gemisch von 100 g Diethylendiglykol und 32 g Lupranol 3300 und 0,1 Gew.-%, bezogen auf den Gesamtansatz, Zinn-II-octoat so zugegeben, daß der Kolbeninhalt rührfähig blieb. Danach wurde die Temperatur auf 190 bis 200°C gesenkt und unter Rühren 2 h gehalten. Danach wurde weiter auf 150°C abgekühlt und 9 g 2-Ethylhexylglycidether zugegeben und eine weitere Stunde bei dieser Temperatur gerührt. Es wurde eine homogene dunkelbraune Flüssigkeit mit folgenden Kennwerten erhalten:

| | |
|---|---|
| OH-Zahl | 610 mg KOH/g |
| Säurezahl | 0,6 mg KOH/g |
| Viskosität bei 25°C | 3180 mPa·s |
| MDA-Gehalt | 0,042 Gew.-% |

## Patentansprüche

1. Verfahren zur Herstellung Isocyanuratgruppen enthaltender Polyole durch Umsetzung von Polyisocyanuraten mit Ethylenglykol, Diethylenglykol, Propylenglykol, Dipropylenglykol, einzeln oder im Gemisch untereinander, dadurch gekennzeichnet, daß die Umsetzung der Polyisocyanurate in Anwesenheit von Trägerpolyolen mit einer OH-Zahl von höchstens 500 mg KOH/g und einer Molmasse von mindestens 450 g/mol erfolgt.

2. Verfahren nach Anspruch 1, dadurch gekennzeichnet, daß als Trägerpolyole Polyole auf Basis von Glycerin und/oder Trimethylolpropan eingesetzt werden.

3. Verfahren nach einem der Ansprüche 1 oder 2, dadurch gekennzeichnet, daß das Gemisch aus eingesetzten kurzkettigen, Hydroxylgruppen enthaltenden Verbindungen und Trägerpolyol vor Zugabe des Polyisocyanurates auf Temperaturen von 190 bis 240°C aufgeheizt, nach Zugabe des Polyisocyanurates die Temperatur um 10 bis 40°C gesenkt und bei dieser Temperatur die Reaktion über 1,5 bis 3 h unter ständigem Rühren durchgeführt wird.

4. Verfahren nach einem der Ansprüche 1 bis 3, dadurch gekennzeichnet, daß das Reaktionsgemisch nach Abschluß der Reaktion auf 50 bis 150°C abgekühlt und ihm ein Hydroxid eines Alkali- oder Erdalkalimetalles in einer Menge von höchstens 5 Gew.-%, bezogen auf den Gesamtansatz, zugesetzt und bei dieser Temperatur 0,5 bis 1,5 h gerührt wird.

5. Verfahren nach einem der Ansprüche 1 bis 3, dadurch gekennzeichnet, daß das Reaktionsgemisch nach Abschluß der Reaktion auf 100 bis 160°C abgekühlt wird und ihm ein monofunktioneller Glycidether in einer Menge von höchstens 10 Gew.-%, bezogen auf den Gesamtansatz, zugesetzt und bei dieser Temperatur 0,5 bis 1,5 h gerührt wird.

6. Isocyanuratgruppen enthaltende Polyole, herstellbar nach einem der Ansprüche 1 bis 5.

7. Verwendung der Isocyanuratgruppen enthaltenden Polyole nach Anspruch 6 zur Herstellung von Polyurethanen.

8. Verwendung der Isocyanuratgruppen enthaltenden Polyole nach Anspruch 6 zur Herstellung von Polyisocyanuraten.

## Claims

1. A process for preparing polyols containing isocyanurate groups by reacting polyisocyanurates with ethylene glycol, diethylene glycol, propylene glycol or dipropylene glycol, individually or in admixture with one another, wherein the reaction of the polyisocyanurates is carried out in the presence of carrier polyols having an OH number of at most 500 mg KOH/g and a molecular mass of at least 450 g/mol.

2. A process as claimed in claim 1, wherein the carrier polyols used are polyols based on glycerol and/or trimethylolpropane.

3. A process as claimed in claim 1 or 2, wherein the mixture of short-chain, hydroxyl-containing compounds used and carrier polyol is heated to from 190 to 240°C before addition of the polyisocyanurate, the temperature is lowered by from 10 to 40°C after addition of the polyisocyanurate and the reaction is carried out at this temperature for from 1.5 to 3 hours with continual stirring.

4. A process as claimed in any one of claims 1 to 3, wherein the reaction mixture is, after completion of the reaction, cooled to from 50 to 150°C, a hydroxide of an alkali metal or alkaline earth metal is added to the reaction mixture in an amount of at most 5 % by weight, based on the total mixture, and the mixture is stirred for from 0.5 to 1.5 hours at this temperature.

5. A process as claimed in any one of claims 1 to 3, wherein the reaction mixture is, after the reaction is complete, cooled to from 100 to 160°C, a monofunctional glycidyl ether is added to the reaction mixture in an amount of at most 10 % by weight, based on the total mixture, and the mixture is stirred for from 0.5 to 1.5 hours at this temperature.

6. A polyol containing isocyanurate groups, which can be prepared by the process claimed in any one of claims 1 to 5.

7. Use of the polyol containing isocyanurate groups as claimed in claim 6 for producing polyurethanes.

8. Use of the polyol containing isocyanurate groups as claimed in claim 6 for producing polyisocyanurates.

## Revendications

1. Procédé pour la préparation de polyols contenant des groupes isocyanurates par réaction de polyisocyanurates avec de l'éthylèneglycol, du diéthylèneglycol, du propylèneglycol, du dipropylèneglycol, seuls ou en mélange, qui est caractérisé en ce que la réaction des polyisocyanurates est effectuée en présence de polyols de support avec un indice OH d'au maximum 500 mg de KOH/g et avec une masse molaire d'au moins 450 g/mole.

2. Procédé selon la revendication 1, caractérisé en ce qu'on utilise à titre de polyols de support, des polyols à base de glycérine et/ou de triméthylol-propane.

3. Procédé selon l'une des revendications 1 ou 2, caractérisé en ce que le mélange constitué des composés à courte chaîne, contenant des groupes hydroxyles, et du polyol de support est chauffé avant l'addition du polyisocyanurate à des températures de 190 à 240 °C, en ce qu'on diminue la température après l'addition du polyisocyanurate de 10 à 40°C et en ce qu'on effectue la réaction à cette température pendant 1,5 à 3 heures sous agitation continue.

4. Procédé selon l'une des revendications 1 à 3, caractérisé en ce qu'au terme de la réaction, le mélange réactionnel est refroidi à 50 à 150 °C et en ce qu'on y ajoute un hydroxyde d'un métal alcalin ou alcalino-terreux en une quantité d'au maximum 5 % en poids, par rapport à la préparation totale et en ce qu'on l'agite à cette température pendant 0,5 à 1,5 heures.

5. Procédé selon l'une des revendications 1 à 3, caractérisé en ce qu'au terme de la réaction, le mélange réactionnel est refroidi à 100 à 160 °C et en ce qu'on y ajoute un éther glycidylique monofonctionnel en une quantité d'au maximum 10% en poids, par rapport à la préparation totale et en ce qu'on l'agite à cette température pendant 0,5 à 1,5 heures.

6. Polyols contenant des groupes isocyanurates, pouvant être préparés selon l'une des revendications 1 à 5.

7. Utilisation des polyols contenant des groupes isocyanurates selon la revendication 6 pour la préparation de polyuréthanes.

8. Utilisation des polyols contenant des groupes isocyanurates selon la revendication 6 pour la préparation de polyisocyanurates.
